(19) Europäisches Patentamt
European Patent Office
Office européen des brevets

(11) **EP 3 958 075 A1**

(12) **EUROPÄISCHE PATENTANMELDUNG**

(43) Veröffentlichungstag:
**23.02.2022 Patentblatt 2022/08**

(21) Anmeldenummer: **20191315.9**

(22) Anmeldetag: **17.08.2020**

(51) Internationale Patentklassifikation (IPC):
**G05B 19/408** $^{(2006.01)}$   **G05B 19/41** $^{(2006.01)}$
**B23B 3/26** $^{(2006.01)}$

(52) Gemeinsame Patentklassifikation (CPC):
**G05B 19/41; B23B 1/00; B23B 3/26;**
**G05B 19/4086**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Kreilos, Tobias**
**71106 Magstadt (DE)**
• **Spielmann, Ralf**
**70569 Stuttgart (DE)**

(54) **INTERPOLATIONSDREHEN MIT VARIABLER WINKELGESCHWINDIGKEIT**

(57) Bei einem Verfahren zur Steuerung der Relativbewegung zwischen einem Werkzeug (2) und einem Werkstück (3, 11) zur Bearbeitung des Werkstücks (3, 11) mittels einer Werkzeugmaschine (1) ist vorgesehen dass:

- ein Maschinenkoordinatensystem (MKS) in Bezug zu einer Maschinenbasis (4) der Werkzeugmaschine (1) festgelegt wird,
- ein Rotationskoordinatensystem (RKS) in Relation zu dem Maschinenkoordinatensystem (MKS) festgelegt wird durch:
- Festlegung des Koordinatenursprungs des Rotationskoordinatensystems (RKS) in dem Maschinenkoordinatensystem (MKS),
- Festlegung der Orientierung wenigstens einer ausgewählten Koordinatenachse (z') des Rotationskoordinatensystems (RKS) in dem Maschinenkoordinatensystem (MKS),
- Festlegung einer Rotationsachse (z'), um die das Rotationskoordinatensystem (RKS) in dem Maschinenkoordinatensystem (MKS) rotiert,
- Festlegung einer Winkelgeschwindigkeit (ω), mit der das Rotationskoordinatensystem (RKS) um die Rotationsachse (z') rotiert,

- wenigstens eine Werkzeugbahn (15) in dem Rotationskoordinatensystem (RKS) festgelegt wird,
- die Relativbewegung gemäß der in dem Rotationskoordinatensystem (RKS) festgelegten Werkzeugbahn (15) gesteuert wird,
wobei die Winkelgeschwindigkeit (ω), mit der das Rotationskoordinatensystem (RKS) um die Rotationsachse (z') rotiert, während der Bearbeitung des Werkstücks (3, 11) variiert.

Durch diese Vorgehensweise können relativ komplexe Bewegungsvorgänge einer Werkzeugmaschine insbesondere im Zusammenhang mit dem sog. Interpolationsdrehen in relativ einfacher Weise beschrieben bzw. programmiert werden.

FIG 8

**Beschreibung**

Die Erfindung betrifft ein Verfahren sowie eine numerische Steuereinrichtung zur Steuerung einer Relativbewegung zwischen einem Werkzeug und einem Werkstück zur Bearbeitung des Werkstücks mittels einer Werkzeugmaschine. Ferner betrifft die Erfindung eine Werkzeugmaschine zur Bearbeitung eines Werkstücks mittels eines Werkzeugs, umfassend wenigstens drei translatorische Achsen und wenigstens eine rotatorische Achse sowie eine um eine Werkzeugspindelachse rotierbare Werkzeugspindel zur Relativbewegung eines mit der Werkzeugspindel verbundenen Werkzeuges relativ zu einem Werkstück, welches an einer Werkstückaufnahme der Werkzeugmaschine befestigt ist.

Aus der DE 195 37 292 A1 sind ein Verfahren sowie eine Werkzeugmaschine bekannt, bei denen eine Werkzeugspindel um eine Werkzeugspindelachse und synchron dazu um eine Rotationsachse rotiert, derart, dass eine Werkzeugschneide eine Drehbearbeitung an einem fest in der Werkzeugmaschine fixierten Werkstück ausführt. Während sich beim klassischen Drehen die Drehkontur aus der Bewegung des Werkzeuges relativ zu dem um eine Werkstückachse rotierenden Werkstück ergibt, bewegt sich bei dem aus der genannten Offenlegungsschrift bekannten Interpolationsdrehen das Werkzeug mit orientierter Schneide um die Symmetrieachse des Werkstücks entlang der zu fertigenden Kontur.

Aus der EP 3 582 043 A1 sind ein Verfahren zur Steuerung einer Relativbewegung zwischen einem Werkzeug und einem Werkstück zur Bearbeitung des Werkstücks mittels einer Werkzeugmaschine, eine numerische Steuereinrichtung zur Durchführung eines derartigen Verfahrens sowie eine Werkzeugmaschine mit einer derartigen numerischen Steuereinrichtung bekannt, wobei ein Maschinenkoordinatensystem in Bezug zu einer Maschinenbasis der Werkzeugmaschine festgelegt wird und ein Rotationskoordinatensystem in Relation zu dem Maschinenkoordinatensystem festgelegt wird. Das bekannte Verfahren umfasst folgende Schritte:

- Festlegung des Koordinatenursprungs des Rotationskoordinatensystems in dem Maschinenkoordinatensystem,
- Festlegung der Orientierung wenigstens einer ausgewählten Koordinatenachse des Rotationskoordinatensystems in dem Maschinenkoordinatensystem,
- Festlegung einer Rotationsachse, um die das Rotationskoordinatensystem in dem Maschinenkoordinatensystem rotiert,
- Festlegung einer Winkelgeschwindigkeit, mit der das Rotationskoordinatensystem um die Rotationsachse rotiert,

wobei wenigstens eine Werkzeugbahn in dem Rotationskoordinatensystem festgelegt wird, wobei die Relativbewegung gemäß der in dem Rotations-koordinatensystem festgelegten Werkzeugbahn gesteuert wird und wobei die Rotationsachse relativ zu dem Werkstück so ausgerichtet wird, dass sie auf einer Werkstückbearbeitungsachse eines durch das Werkzeug zu bearbeitenden Werkstückbereichs des Werkstücks liegt.

Nachteilig bei dem aus dem EP-Dokument bekannten Verfahren zum Interpolationsdrehen ist, dass dabei die Winkelgeschwindigkeit, mit der das Rotationskoordinatensystem um die Rotationsachse rotiert, nicht genauer spezifiziert ist.

Aufgabe der vorliegenden Erfindung ist es daher, ein Verfahren zur Steuerung einer Werkzeugmaschine, eine numerische Steuereinrichtung sowie eine Werkzeugmaschine anzugeben, bei denen die Winkelgeschwindigkeit, mit der das Rotationskoordinatensystem um die Rotationsachse rotiert, vorteilhaft bestimmt wird.

Diese Aufgabe wird gelöst durch ein Verfahren gemäß Patentanspruch 1, also ein Verfahren zur Steuerung einer Relativbewegung zwischen einem Werkzeug und einem Werkstück zur Bearbeitung des Werkstücks mittels einer Werkzeugmaschine,

- wobei ein Maschinenkoordinatensystem in Bezug zu einer Maschinenbasis der Werkzeugmaschine festgelegt wird,
- wobei ein Rotationskoordinatensystem in Relation zu dem Maschinenkoordinatensystem festgelegt wird durch:

    - Festlegung des Koordinatenursprungs des Rotationskoordinatensystems in dem Maschinenkoordinatensystem,
    - Festlegung der Orientierung wenigstens einer ausgewählten Koordinatenachse des Rotationskoordinatensystems in dem Maschinenkoordinatensystem,
    - Festlegung einer Rotationsachse, um die das Rotationskoordinatensystem in dem Maschinenkoordinatensystem rotiert,
    - Festlegung einer Winkelgeschwindigkeit, mit der das Rotationskoordinatensystem um die Rotationsachse rotiert,

- wobei wenigstens eine Werkzeugbahn in dem Rotationskoordinatensystem festgelegt wird, wobei die Relativbewegung gemäß der in dem Rotationskoordinatensystem festgelegten Werkzeugbahn gesteuert wird und
- wobei die Rotationsachse relativ zu dem Werkstück so ausgerichtet wird, dass sie auf einer Werkstückbearbeitungsachse eines durch das Werkzeug zu bearbeitenden Werkstückbereichs des Werkstücks liegt,

dadurch gekennzeichnet, dass die Winkelgeschwindigkeit, mit der das Rotationskoordinatensystem um die Rotationsachse rotiert, während der Bearbeitung des Werkstücks variiert.

Ferner wird die Aufgabe gelöst durch eine numerische Steuereinrichtung zur Durchführung eines derartigen Verfahrens nach Anspruch 11.

Weiterhin wird die Aufgabe gelöst durch eine Werkzeugmaschine mit einer derartigen Steuerung nach Anspruch 15.

Für den Fachmann selbstverständlich, handelt es bei den Begriffen "steuern" bzw. "Steuerung" lediglich um den üblichen Sprachgebrauch. Im streng regelungstechnischen Sinn verbergen sich dahinter jedoch Regelungsvorgänge zur Lageregelung der betreffenden Maschinenachsen.

Wie üblich wird zunächst ein (ortsfestes) Maschinenkoordinatensystem, nachfolgend als MKS bezeichnet, in Bezug zu einer Maschinenbasis der Werkzeugmaschine festgelegt. Vorteilhaft wird hierfür ein kartesisches Koordinatensystem gewählt, welches so ausgerichtet wird, dass die Koordinatenachsen parallel zu drei bzw. den drei translatorischen Achsen (Linearachsen) der Werkzeugmaschine ausgerichtet sind. Dies reduziert den Rechenaufwand bei der Berechnung der einzelnen Achsbewegungen beim Abfahren einer bestimmten Werkzeugbahn. Prinzipiell sind jedoch eine beliebige Wahl der Lage des Koordinatenursprungs und der Orientierungen der Koordinatenachsen möglich.

Weiterhin wird bei der Erfindung ein Rotationskoordinatensystem, nachfolgend als RKS bezeichnet, in Relation zu dem Maschinenkoordinatensystem festgelegt. Auch hierbei kann es sich im Prinzip um ein beliebiges Koordinatensystem handeln. Vorteilhaft wird jedoch auch hierfür ein kartesisches Koordinatensystem gewählt. Durch eine entsprechende Koordinatentransformation können die Koordinaten eines in dem MKS festgelegten Punktes in dem RKS angegeben werden und umgekehrt. Entsprechend können Bahnpunkte bzw. Werkzeugbahnen von einem Koordinatensystem in ein anderes transferiert bzw. umgerechnet werden. Die Verwendung von Koordinatentransformationen ist bei Werkzeugmaschinen an sich bekannt und üblich.

Allgemein sieht die Erfindung vor, dass das RKS durch Vorgabe des Koordinatenursprungs bezüglich des MKS sowie durch Vorgabe der Orientierung wenigstens einer ausgewählten Koordinatenachse (beispielsweise der z'-Achse) des RKS in dem MKS definiert wird. Die Orientierungen der beiden übrigen Koordinatenachsen sind beliebig festlegbar. Vorzugsweise werden bei dem RKS drei Koordinatenachsen so festgelegt, dass sie ein kartesisches Koordinatensystem bilden.

Weiterhin werden eine Rotationsachse, um die das RKS in dem MKS rotiert, sowie eine Winkelgeschwindigkeit, mit der das RKS um die Rotationsachse rotiert, festgelegt. Vorzugsweise wird als Rotationsachse eine Achse gewählt, die nicht mit einer Achse des MKS zusammenfällt. Vorzugsweise wird ferner die Winkelgeschwindigkeit so festgelegt, dass sie mit einer Spindeldrehzahl einer Werkzeugspindel der Werkzeugmaschine korreliert. Insbesondere entspricht die Winkelgeschwindigkeit der Spindeldrehzahl.

Durch diese Vorgehensweise ist es bei vielen Anwendungsfällen von Werkzeugmaschinen möglich, Werkstückkonturen oder Werkzeugbahnen, das heißt die Relativbewegungen zwischen dem Werkzeug und dem Werkstück, in verhältnismäßig einfacher Weise im RKS festzulegen bzw. zu beschreiben, woraus sich dann verhältnismäßig komplexe Bewegungen der Maschinenachsen bzw. verhältnismäßig komplexe Bewegungen des Werkzeuges relativ zu dem Werkstück im MKS ergeben.

Nachfolgend wird davon ausgegangen, dass es sich sowohl bei dem MKS als auch bei dem RKS um kartesische Koordinatensysteme handelt. Prinzipiell könnte die nachfolgend aufgezeigte Vorgehensweise jedoch analog für beliebige Koordinatensysteme angewandt werden. Die Verwendung kartesischer Koordinatensysteme ist im Zusammenhang mit Werkzeugmaschinen üblich und erleichtert die Berechnung von Bahnpunkten in unterschiedlichen Koordinatensystemen.

Die Erfindung sieht vor, dass die Winkelgeschwindigkeit $\omega$, mit der das Rotationskoordinatensystem um die Rotationsachse rotiert, während der Bearbeitung des Werkstücks variiert. Durch die Variationsmöglichkeit bezüglich der Winkelgeschwindigkeit lässt sich die Bearbeitung des Werkstücks besser an eine Vielzahl von Parametern adaptieren. Beispielsweise könnte während der Bearbeitung die Temperatur des Werkstücks kontrolliert werden. Wird das Werkstück während der Bearbeitung zu heiß, so könnte die Winkelgeschwindigkeit und damit die Bearbeitungsgeschwindigkeit reduziert werden. Die Winkelgeschwindigkeit könnte so als Funktion der Werkstücktemperatur festgelegt werden.

Bei einer bevorzugten Ausführungsform der Erfindung ist das Werkzeug in einer Werkzeugspindel befestigt und rotiert um eine Werkzeugspindelachse. Dabei wird die Werkzeugspindel derart bezüglich der Rotationsachse bewegt, dass die Werkzeugspindelachse mit der Winkelgeschwindigkeit (ebenso wie das Rotationskoordinatensystem) um die Rotationsachse rotiert. Dieser Zustand wird nachfolgend als eingeschaltete oder aktive Transformation bezeichnet.

Bei einer bevorzugten Ausführungsform der Erfindung wird die Winkelgeschwindigkeit als Funktion des Abstands einer Schneide des Werkzeugs von der Rotationsachse (des RKS) festgelegt. Diese Ausführungsform bietet den Vorteil, dass sich damit insbesondere konstante Schnittgeschwindigkeiten erreichen lassen. Dies bringt eine Reihe an Vorteilen für den Schneidvorgang. Zum Beispiel wird das Werkzeug gleichmäßig beansprucht. Außerdem verbessert eine konstante Schnittgeschwindigkeit die Oberflächenqualität des Werkstücks.

Bei einer Ausführungsform der Erfindung richten sich zumindest die Lage und Orientierung der Rotationsachse, insbesondere aber auch die Lage und Orientierung des RKS, nach einer Werkstückbearbeitungsachse. Die Werkstückbearbeitungsachse ist vorzugsweise eine Symmetrieachse eines wenigstens im Wesentlichen rotationssymmetrischen Teilbereichs des Werkstücks (Werkstückbereichs), der bearbeitet werden soll. Eben dieser Werkstückbereich soll vorzugsweise durch Interpolationsdrehen gemäß der Erfindung bearbeitet werden. Die Werkstückbearbeitungsachse ergibt sich aus den Geometriedaten des Werkstücks in Verbindung mit der Aufspannung.

Die Rotationsachse wird vorzugsweise relativ zu dem Werkstück so ausgerichtet, dass sie auf der Werkstückbearbeitungsachse des Werkstücks liegt. Damit rotiert das RKS um die Werkstückbearbeitungsachse.

Eine weitere Vereinfachung kann dadurch erreicht werden, dass die ausgewählte Koordinatenachse (z') parallel zu der Rotationsachse orientiert wird.

Besonders vorteilhaft, insbesondere für den Anwendungsfall "Interpolationsdrehen", wird der Koordinatenursprung des RKS in dem MKS so festgelegt, beispielsweise durch Angabe eines Verschiebungs-Vektors, dass der Koordinatenursprung des RKS auf der Werkstückbearbeitungsachse liegt. Im Prinzip kann jeder Punkt auf der Werkstückbearbeitungsachse als Koordinatenursprung des RKS dienen.

Weiterhin werden Lage und Orientierung der ausgewählten Koordinatenachse (z'-Achse) so gewählt, dass sie mit der Werkstückbearbeitungsachse zusammenfällt. Dadurch kann für die Bearbeitung "Interpolationsdrehen" im RKS auf bereits für herkömmliche Drehmaschinen erstellte Drehzyklen zurückgegriffen werden, die beispielsweise eine Kontur in der x-z-Ebene festlegen.

Nachdem eine ausgewählte Achse des RKS (z'-Achse) sowie der Nullpunkt des RKS festgelegt wurden kann eine Orientierung einer weiteren Achse (x-Achse) des RKS in Abhängigkeit der Art der Rotation des RKS (z. B. Euler oder RPY) um die ausgewählte Achse (z'-Achse) festgelegt werden. Vorteilhaft werden die Achsen des RKS in Bezug zu der Lage und Orientierung der Werkzeugspindelachse in ihrer Ausgangsposition derart festgelegt, dass die Werkzeugspindelachse in einer durch die ausgewählte Achse (z') und die weitere Achse (x') aufgespannten Ebene liegt. Wie beim Drehen üblich erfolgt dann die Zustellung des Werkzeugs in x'-Richtung bei y'=0.

Vorteilhaft wird die Werkzeugspindelachse parallel zur ausgewählten Achse (z') ausgerichtet. Dies entspricht der häufigsten Konstellation bei einer herkömmlichen Drehmaschine.

Vorteilhaft rotiert bei aktiver Transformation und eingeschalteter Werkzeugspindel die Werkzeugspindel um die Werkzeugspindelachse und synchron dazu die Werkzeugspindelachse um die ausgewählte Achse (z') in Bezug zu dem MKS, sodass bei einer Umdrehung der Werkzeugspindel um die Werkzeugspindelachse eine Umdrehung der Werkzeugspindelachse um die ausgewählte Achse (z') erfolgt. Dadurch ist die Werkzeugschneide während eines Umlaufs um den zu bearbeitenden Teil des Werkstücks stets hin zu der Symmetrieachse des zu bearbeitenden Teils des Werkstücks ausgerichtet. Insbesondere bei einem mehrschneidigen Werkzeug können die Rotationsgeschwindigkeiten jedoch auch voneinander abweichen.

Die Erfindung bietet somit unter anderem den Vorteil, dass damit rotationssymmetrische Teilbereiche eines an sich nicht rotationssymmetrischen Werkstücks in verhältnismäßig einfacher Weise durch Interpolationsdrehen bearbeitet werden können. Insbesondere muss eine gewünschte Kontur des Werkstücks nicht mehr durch spezielle Zyklen in eine Vielzahl von Werkzeugbahnen zerlegt werden. Vielmehr kann hierfür auf einfache Drehzyklen zurückgegriffen werden.

In vielen Anwendungsfällen kann durch eine geschickte Aufspannung des Werkstücks in der Werkzeugmaschine erreicht werden, dass die Werkstückbearbeitungsachse in der x-y-Ebene des MKS liegt. Dann muss das RKS lediglich um eine Achse des WKS gegenüber diesem geschwenkt werden, damit die ausgewählte Achse (z') auf mit der Werkstückbearbeitungsachse zusammenfällt. Durch die Festlegung der Orientierung der ausgewählten Achse liegen dann auch die beiden anderen Achsen des RKS bezüglich des MKS fest. Für diesen Spezialfall genügen also die Festlegung des Koordinatenursprungs sowie die Orientierung der ausgewählten Achse, um daraus die Lage und Orientierung des RKS in dem MKS und damit die Koordinatentransformation ableiten zu können.

Das RKS kann zum Erreichen einer gewünschten Lage und Orientierung der ausgewählten Achse (z') aber auch um mehr als eine Achse gegenüber dem MKS im Raum gedreht werden müssen. Beispielsweise geht dann das RKS durch Angabe des Verschiebungs-Vektors bezüglich des Koordinaten-Ursprungs sowie die Angabe der sog. Euler-Winkel aus dem MKS hervor. Damit können Koordinaten des RKS in Koordinaten des MKS umgerechnet werden und umgekehrt.

Die Orientierung der ausgewählten Achse (z') richtet sich nach der Werkstückbearbeitungsachse. Für die Orientierung der beiden übrigen Achsen gibt es - auch unter der Annahme eines kartesischen RKS - im Prinzip unendlich viele Möglichkeiten.

Um eine klare Ausgangssituation für die Bearbeitung des Werkstücks zu schaffen, wird daher die Orientierung einer weiteren Achse des RKS, beispielsweise der x'-Achse, vorgegeben. Die Orientierung der verbleibenden Achse, im Beispiel der y'-Achse, ist damit auch bestimmt.

Als Besonderheit wird im Zusammenhang mit der Erfindung jedoch keine statische, sondern eine dynamische Koordinatentransformation bestimmt. Es werden nämlich sowohl eine Rotationsachse, um die das RKS in dem MKS rotiert, vorzugsweise die z'-Achse, als auch eine Winkelgeschwindigkeit für die Rotation angegeben. Dies hat zur Folge, dass bei aktiver Transformation ein im RKS ortsfester Punkt aus Sicht des MKS mit eben dieser Winkelgeschwindigkeit um die Rotationsachse rotiert. Ebenso verhält es sich mit einer im RKS als ortsfest festgelegten Lage und Orientierung einer Werkzeugspindel bzw. eines damit verbundenen Werkzeuges. Auch diese rotieren bei eingeschalteter Transformation mit dieser Winkelgeschwindigkeit um die Rotationsachse.

Vorteilhaft wird vor dem Einschalten der Koordinatentransformation, also in dem noch statischen RKS, die Spindellage und -orientierung bzw. die Werkzeuglage und -orientierung im RKS festgelegt, also die Ausgangslage. Bei aktiver Transformation und bezüglich der Rotation des RKS synchroner Rotation der Werkzeugspindel wird so automatisch die richtige Interpolationsdrehbewegung der Werkzeugspindel erzeugt.

In einer besonders vorteilhaften Ausführungsform ist die Werkzeugspindelachse parallel zur Rotationsachse des Koordinatensystems ausgerichtet.

Bei einer weiterhin besonders vorteilhaften Ausführungsform ist das Werkzeug, insbesondere eine Werkzeugschneide, zu der Rotationsachse hin oder in dazu entgegengesetzter Richtung orientiert.

Unter den zuletzt gemachten Annahmen kann die Werkzeugbewegung im RKS wie bei einer einfach aufgebauten, 2-Achs Drehmaschine angegeben werden.

In der Regel wird im Zusammenhang mit der Erfindung eine zu erstellende - vorzugsweise rotationssymmetrische - Kontur eines Werkstücks bzw. Werkstückbereichs in dem RKS vorgegeben. Anschließend werden, insbesondere unter Verwendung von Drehalgorithmen, die bei der Steuerung bzw. Bahngenerierung herkömmlicher Drehmaschinen verwendet werden, Werkzeugbahnen ermittelt, die zur Erzeugung der vorgegebenen Kontur dienen.

Gemäß der Erfindung werden die Werkzeugbahnen bezüglich des RKS festgelegt und die Relativbewegungen zwischen dem Werkzeug und dem Werkstück gemäß der in dem RKS festgelegten Werkzeugbahnen erzeugt. Hierzu werden zur Bewegung der Maschinenachsen jeweils die in dem RKS bestimmten Bahnpunkte mittels einer entsprechenden Koordinatentransformation in Bahnpunkte bzw. Achspositionen des MKS gewandelt und entsprechend angefahren.

Ein Vorteil der erfindungsgemäßen Einführung eines RKS besteht darin, dass nun die Lage und/oder Orientierung der Werkzeugspindelachse, die Lage und/oder Orientierung des Werkzeugs, insbesondere einer Werkzeugschneide, sowie die gewünschte Kontur des Werkstücks im RKS festgelegt werden können. Dies erfolgt analog zu der Festlegung der entsprechenden Größen bei einer herkömmlichen Drehmaschine. In Analogie zum Drehen mit einer herkömmlichen Drehmaschine erfolgt vorzugsweise die Festlegung der Kontur in der x'-z'-Ebene des RKS. Daraus ermittelt die Steuerung vorteilhaft die zum Herstellen der Kontur notwendigen Werkzeugbahnen zunächst ebenfalls im RKS.

Der hauptsächliche Unterschied zum herkömmlichen Interpolationsdrehen liegt nun darin begründet, dass die Koordinatentransformation zur Festlegung des RKS in Bezug zu dem MKS nicht statisch, sondern dynamisch ist. Synchron zur Drehung der Werkzeugspindel rotiert das RKS in Bezug zu dem MKS um die ausgewählte Achse (z'-Achse) des RKS. Aus Sicht des RKS ergibt sich durch die entsprechende Kopplung der Maschinenachsen, dass die Werkzeugspindel und insbesondere das Werkzeug gegenüber dem zu bearbeitenden Teilbereich des Werkstücks ortsfest sind, wohingegen dieser Werkstückteilbereich um seine Symmetrieachse, die Werkstückbearbeitungsachse rotiert. Somit entsteht aus Sicht des Programmierers der gleiche Ausgangszustand wie bei der Drehbearbeitung mittels einer herkömmlichen Drehmaschine. Während der Rotation der Werkzeugspindel um die Werkzeugspindelachse und der Rotation des RKS in Bezug zu dem MKS werden nun zur Herstellung der gewünschten Werkstückkontur die in dem RKS festgelegten Bearbeitungsbahnen des Werkzeugs (Werkzeugbahnen) abgefahren.

Für den Benutzer ergibt sich bei der erfindungsgemäßen Vorgehensweise insbesondere der Vorteil, dass zur Bestimmung von Werkzeugbahnen bereits auf vorhandene, für herkömmliche Drehbearbeitungen mittels herkömmlicher Drehmaschinen programmierte Drehzyklen zurückgegriffen werden kann. Die Erstellung neuer, in der Regel hoch komplexen Spezialzyklen für das Interpolationsdrehen erübrigt sich dadurch für viele Anwendungsfälle. Dies ist ein wesentlicher Zeit- und Kostenvorteil.

Wie bereits ausgeführt wurde, handelt es sich sowohl bei dem MKS als auch bei dem RKS vorzugsweise jeweils um ein kartesisches Koordinatensystem. Prinzipiell können in Sonderfällen für besondere Anwendungen auch andere Koordinatensysteme zugrunde gelegt werden. Die Festlegung des Koordinatenursprungs sowie die Ausrichtung der Achsen des Koordinatensystems in Relation zu dem bearbeitenden Teilbereich des Werkstücks erfolgen vorteilhaft analog zu der entsprechenden Auswahl bei der Drehbearbeitung mittels einer herkömmlichen Drehmaschine.

Nachfolgend soll der mathematische Hintergrund zu der Erfindung näher erläutert werden. Es wird dazu davon ausgegangen, dass die Kinematik der Maschine durch eine Kette von Rundachsen, Linearachsen und konstanten Offsets beschrieben werden kann.

Im Zusammenhang mit der Erfindung ist es erforderlich, einen definierten Punkt am Werkstück mit einer definierten räumlichen Orientierung anzufahren. Um allgemein einen beliebigen Punkt mit einer beliebigen Orientierung anzufahren benötigt man wenigstens drei Freiheitsgrade der Orientierung und drei Freiheitsgrade der Translation.

Da Orientierungen nur durch Drehungen veränderbar sind, muss die kinematische Kette mindestens drei rotatorische Achsen enthalten, um eine beliebige Orientierung im Raum einstellen zu können.

Damit das Problem eindeutig lösbar ist, muss die Gesamtzahl der Achsen wenigstens sechs sein, von denen wenigstens drei als rotatorische Achsen (Rundachsen) ausgebildet sind. Die restlichen drei Achsen können (in beliebiger Kombination) sowohl Rund- als auch Linearachsen sein. Die Zahl der konstanten Offsets ist beliebig.

Hinweis: Die Maschine kann in der Kette auch weitere (redundante) Achsen enthalten. Die Bestimmung der Achspositionen ist dann nicht mehr eindeutig, bzw. es müssen für solche Konstellationen zur Positionsbestimmung dieser Achsen weitere Kriterien herangezogen werden.

Nachfolgend wird ein Beispiel für eine Kinematik mit drei Linear- und drei Rundachsen beschrieben:
Die Teile am Anfang und am Ende der kinematischen Kette und zwischen den rotatorischen Achsen werden als Abschnitte bezeichnet. D.h. es gibt genau vier Abschnitte. Jeder dieser Abschnitte kann Linearachsen enthalten (mit der Randbedingung, dass ihre Gesamtzahl drei ist).

Mit den Bezeichnungen

| | |
|---|---|
| $\vec{r}_n$ | Linearer Offset |
| $\underline{A}_n$ | Drehung (rotatorische Maschinenachse) |
| $\vec{u}$ | Werkzeugvektor |
| $\underline{F}$ | Drehung des Werkstückkoordinatensystems gegenüber dem MKS |
| $\vec{f}$ | Nullpunktverschiebung im gedrehten Werkstückkoordinatensystem |
| $\underline{S}$ | Drehung um die Bearbeitungsachse des Werkstücks |
| $\vec{p}$ | Position des Bearbeitungspunktes in Werkstückkoordinaten |

gilt dann:

$$\vec{r_1} + \underline{A_1} * (\vec{r_2} + \underline{A_2} * (\vec{r_3} + \underline{A_3} * (\vec{r_4} + \vec{u}))) = \underline{F} * (\vec{f} + \underline{S}(\omega t) * \vec{p}) \qquad (1)$$

Der lineare Offset $\vec{r_n}$ des n-ten Abschnitts ist definiert als

$$\vec{r_n} = \vec{c_n} + \sum_{i=1}^{k_n} x_{n_i} * \vec{e_{n_i}} \qquad (2)$$

mit:

| | |
|---|---|
| $\vec{c_n}$ | konstanter Offset |
| $k_n$ | Zahl der Linearachsen im Abschnitt n |
| $\vec{e_{n_i}}$ | Einheitsvektor der i-ten Linearachsen im Abschnitt n |
| $x_{n_i}$ | Position der i-ten Linearachse im Abschnitt n |

Für die Bestimmung der Drehwinkel der Drehungen $\underline{A}_n$ (d.h. der Orientierung) können in der obenstehenden Gleichung unter der Voraussetzung, dass $\vec{u}$ und $\vec{p}$ bei Grundstellung im gleichen Koordinatensystem definiert sind wie die Position des Bearbeitungspunktes, die Verschiebungen vernachlässigt werden. Es muss dann die (nichtlineare) Matrizengleichung

$$\underline{A_1} * \underline{A_2} * \underline{A_3} = \underline{F} * \underline{S}(\omega t) \qquad (3)$$

gelöst werden. Ist die genannte Bedingung nicht erfüllt, geht in vorstehende Gleichung eine weiter Drehung ein, die aber lediglich zu einer modifizierten konstanten Drehung $\underline{F}$ führt und somit die Problemstellung nicht wesentliche verändert.

Bei bekannten Drehungen können die Positionen der drei Linearachsen dann als Lösung eines (linearen) Gleichungssystems bestimmt werden.

Bei der Bearbeitung am Umfang des zu fertigenden Teils muss das Werkzeug relativ zur Oberfläche mit konstanter Orientierung geführt werden. Das bedeutet, dass sich das Werkzeug bei einer Umdrehung am Umfang des Teils ebenfalls um eine Achse drehen muss, die zu jedem Zeitpunkt parallel zur Bearbeitungsachse des Werkstücks ist. Eine solche Bewegung kann nach (3) erzeugt werden, indem die mit $\underline{A_1}$ bis $\underline{A_3}$ beschriebenen Drehungen zeitlich entsprechend gesteuert werden.

Technologisch ist aber der Spezialfall von besonderem Interesse, dass die beschriebene Drehung ausgeführt wird, indem sich nur eine einzige Rundachse dreht, während die anderen beiden Rundachsen ihre Position während der Bearbeitung nicht verändern, d.h. sie orientieren die dritte Achse so, dass sie parallel zu Bearbeitungsachse ist. Typischerweise wird das die dritte Achse ($\underline{A_3}$) sein, die als (lageregelte) Spindel ausgeführt sein muss und die das Werkzeug trägt.

Aus Gleichung (3) folgt dann für diesen Spezialfall:

$$\underline{A_1} * \underline{A_2} = \underline{F} = const. \quad und \quad \underline{A_3}(\omega t + \varphi_0) = \underline{S}(\omega t) \qquad (4)$$

Diese Vereinfachung ist nur möglich, wenn das Werkzeug relativ zum Werkstück durch geeignete Wahl von $\varphi_0$ korrekt orientiert werden kann, also wenn Bearbeitungsachse und Drehachse parallel sind.

Die Erfindung wird nachfolgend anhand eines Ausführungsbeispiels näher erläutert. Es zeigen:

Figur 1 eine schematische Darstellung einer zur Ausführung der Erfindung geeigneten Werkzeugmaschine,

Figuren 2 bis 7 Maßnahmen zur Durchführung des erfindungsgemäßen Verfahrens,

Figur 8 die Bearbeitung eines Werkstücks mit variabler Winkelgeschwindigkeit und

Figur 9 wesentliche Verfahrensschritte bei der Durchführung eines erfindungsgemäßen Verfahrens.

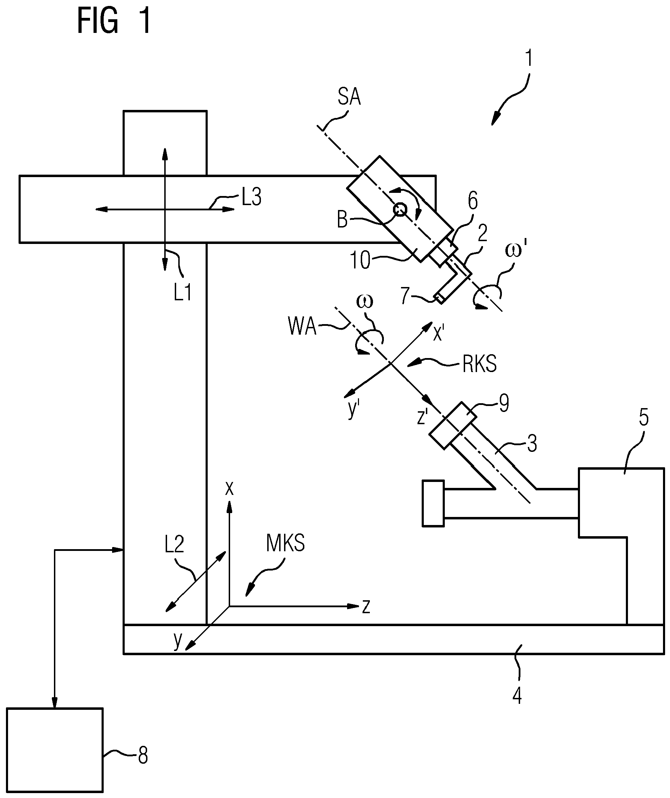

Figur 1 zeigt eine bevorzugte Ausführungsform der Erfindung. Dabei umfasst eine in schematischer, stark vereinfachter Darstellung gezeigte Werkzeugmaschine 1 drei translatorische Achsen L1, L2 und L3 (Linearachsen), mittels derer ein Werkzeug 2 relativ zu einem Werkstück 3 in drei linearen Raumachsen verfahren werden kann. Die Werkzeugmaschine 1 umfasst eine ortsfeste Maschinenbasis 4, an der eine Werkstückaufnahme 5 befestigt ist. Ein Punkt der ortsfesten Maschinenbasis 4 wird als Bezugspunkt (Nullpunkt) für ein ebenfalls ortsfestes MKS mit den Koordinatenachsen x, y und z gewählt. Die Koordinatenachsen x, y und z des MKS sind vorteilhaft so gewählt, dass die x-Achse parallel zu L1, die y-Achse parallel zu L2 und die z-Achse parallel zu L3 ausgerichtet sind. Ferner ist bei der Werkzeugmaschine 1 ein um eine rotatorische Achse B (Rundachse) schwenkbarer Werkzeugkopf vorhanden, mittels der das Werkzeug 2 um eine zur y-Achse parallele B-Achse geschwenkt werden kann. Das Werkzeug 2 ist an einer von dem Werkzeugkopf 10 umfassten Werkzeugspindel 6 befestigt und um eine Werkzeugspindelachse SA rotierbar. Auch die Werkzeugspindel 6 ist - wie die übrigen Achsen - mit einem lagegeregelten Antrieb versehen, so dass bei der Werkzeugspindel 6 ein beliebiger Winkel einstellbar und dadurch eine Schneide 7 des Werkstücks 2 bezüglich der Werkzeugspindelachse SA orientierbar ist. Zur koordinierten Lageregelung der einzelnen Achsen der Werkzeugmaschine 1 ist eine numerische Steuerung 8 vorhanden.

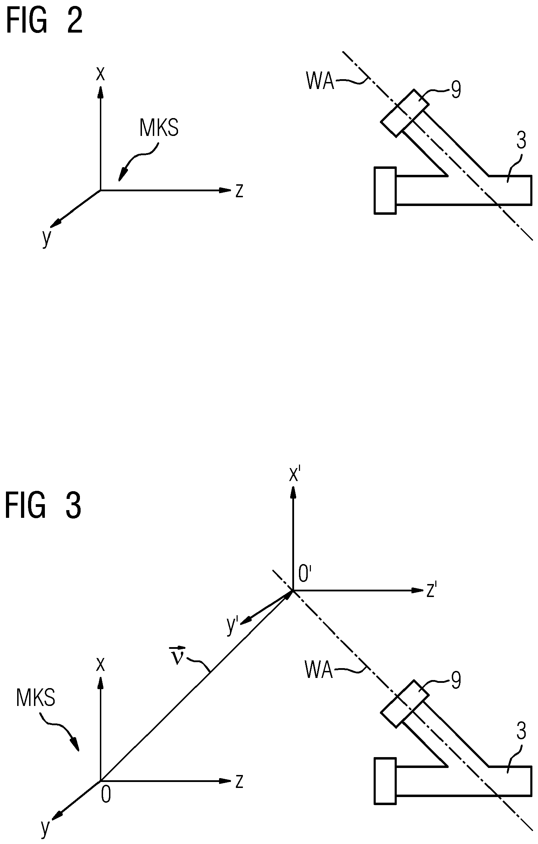

Nachfolgend wird anhand der Figuren 2 bis 7 die erfindungsgemäße Vorgehensweise für eine Drehbearbeitung des Werkstücks 3 in der aus dem Ausführungsbeispiel gemäß Figur 1 ersichtlichen Aufspannung näher erläutert. Hierzu veranschaulicht Figur 2 nochmals das MKS mit den Koordinatenachsen x, y und z sowie das nicht rotationssymmetrische, ortsfest in der Werkzeugmaschine eingespannte Werkstück 3 mit einem zu bearbeitenden, bezüglich einer Werkstückbearbeitungsachse WA rotationssymmetrischen Werkstückbereich 9.

Gemäß der Erfindung wird für die auszuführende Bearbeitung des Werkstücks 3 zunächst ein kartesisches RKS mit den Koordinatenachsen x', y' und z' festgelegt. Wie aus Figur 3 ersichtlich, wird hierzu zunächst ein Verschiebungsvektor $\vec{v}$ für den Koordinatenursprung bestimmt, derart, dass der Koordinatenursprung 0' des RKS auf der Werkstückbearbeitungsachse WA des Werkstücks 3 liegt. Die Werkstückbearbeitungsachse WA ist im Ausführungsbeispiel eine Symmetrieachse eines Werkstückbereiches 9, der erfindungsgemäß bearbeitet werden soll.

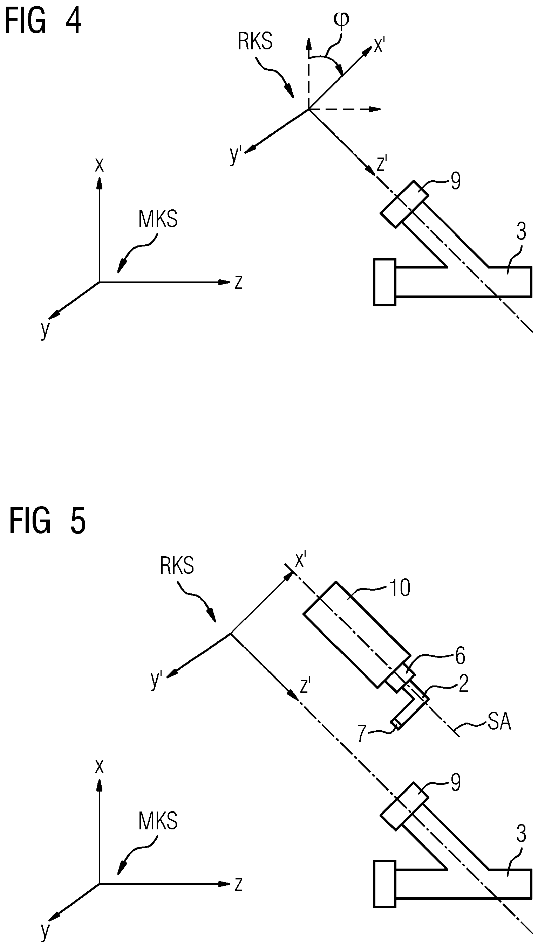

Weiterhin wird - wie aus Figur 4 ersichtlich - die z'-Achse so orientiert, dass sie auf der Werkstückbearbeitungsachse WA des Werkstücks 3 liegt. Bei der besonders vorteilhaften Ausführungsform gemäß dem Ausführungsbeispiel liegt die Werkstückbearbeitungsachse WA durch eine entsprechende Positionierung und Orientierung des Werkstücks 3 in der x-z-Ebene des MKS. Damit geht die Orientierung der z'-Achse durch eine einzige Schwenkbewegung der z-Achse um die y-Achse aus dem MKS hervor. Es genügt somit die Angabe eines einzigen Winkels $\varphi$, um den die x'-Achse und die z'-Achse um die y'-Achse geschwenkt werden müssen, um die Orientierung des RKS im MKS festzulegen. Würde die Werkstückbearbeitungsachse WA nicht in der x-z-Ebene des MKS liegen, so wäre noch wenigstens eine weitere Schwenkbewegung erforderlich, damit die z'-Achse auf der Werkstückbearbeitungsachse WA zu liegen käme.

Unter der Maßgabe, dass auch die x'-Achse in der x-z-Ebene liegen soll, sind damit auch die Orientierungen der x'-Achse sowie der y'-Achse und damit das gesamte RKS in Bezug auf das MKS eindeutig bestimmt.

Bei der erfindungsgemäßen Vorgehensweise werden die Werkzeugpfade zur Bearbeitung des Werkstücks 3 nicht in dem MKS sondern in dem RKS vorgegeben. Figur 5 veranschaulicht hierfür die Ausgangssituation, bei der die Lage und Orientierung des Werkzeugkopfes 10 und insbesondere der Werkzeugschneide 7 in dem RKS vorgegeben sind. Bei der besonders vorteilhaften Ausgangslage gemäß Figur 5 liegt die Spindelachse SA in der x'-z'-Ebene und ist parallel zu der z'-Achse orientiert. Das Werkzeug 2 ist entgegen der x'-Richtung orientiert.

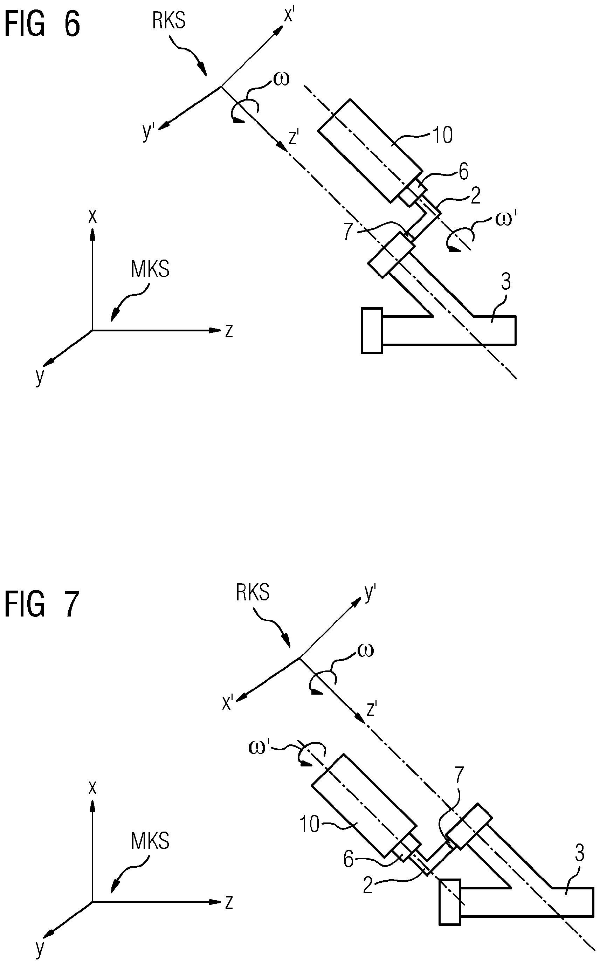

Eine Besonderheit der erfindungsgemäßen Koordinatentransformation liegt nun darin begründet, dass das wie beschrieben festgelegte RKS nun kontinuierlich mit einer vorgebbaren Winkelgeschwindigkeit $\omega$ um die z'-Achse rotiert. Dies führt dazu, dass eine im RKS vorgegebene, konstante Position und Orientierung des Werkzeuges 2 aus Sicht des MKS zu einer Kreisbewegung des Werkzeuges 2 mit der Winkelgeschwindigkeit $\omega$ um die z'-Achse führt und sich die Orientierung der Schneide 7 bei dieser Bewegung ebenfalls mit der Winkelgeschwindigkeit $\omega$ ändert. Die Winkelgeschwindigkeit $\omega'$, mit der die Werkzeugspindel 6 um die Werkzeugspindelachse SA rotiert, ist somit gleich der Winkelgeschwindigkeit $\omega$, mit der das RKS um die z'-Achse rotiert. Die Rotation der Werkzeugspindel 6 ist also synchron mit der Rotation des RKS. Im Ausführungsbeispiel bleibt die Schneide 7 damit stets parallel zu der x'-Achse orientiert, so dass die Schneide 7 bei der Rotation des Werkzeuges 2 stets zur z'-Achse weist. Dies ist in den Figuren 6 und 7 veranschaulicht, die die Werkstückbearbeitung in zwei unterschiedlichen Zeitpunkten zeigt. Ein mit dem RKS mitbewegter Beobachter sieht somit ein ortsfestes Werkzeug mit konstanter Orientierung sowie einen um die z'-Achse rotierenden Werkstückbereich 9. Dies stellt jedoch die typische Ausganssituation für die Bearbeitungsart "Drehen" mittels einer herkömmlichen Drehmaschine dar.

Ausgehend von dieser Ausgangssituation wird die (rotationssymmetrische) Kontur des zu bearbeitenden Werkstückbereiches 9 in der x'-z'-Ebene vorgegeben. Aus der vorgegebenen Kontur werden anschließend in der Steuerung 8 die Werkzeugbahnen - wie bei einer herkömmlichen Drehmaschine - berechnet. Die Steuerung 8 setzt die für das RKS berechneten Werkzeugbahnen unter Berücksichtigung der oben beschriebenen Koordinatentransformation in Werkzeugbahnen bezüglich des MKS und die entsprechenden koordinierten Bewegungen der betreffenden Maschinen-Achsen L1 bis L3 und B der Werkzeugmaschine 1 um.

Gemäß der Erfindung ist die Winkelgeschwindigkeit $\omega$, mit der das Rotationskoordinatensystem RKS um die Rotationsachse z' rotiert, während der Bearbeitung eines Werkstücks variabel.

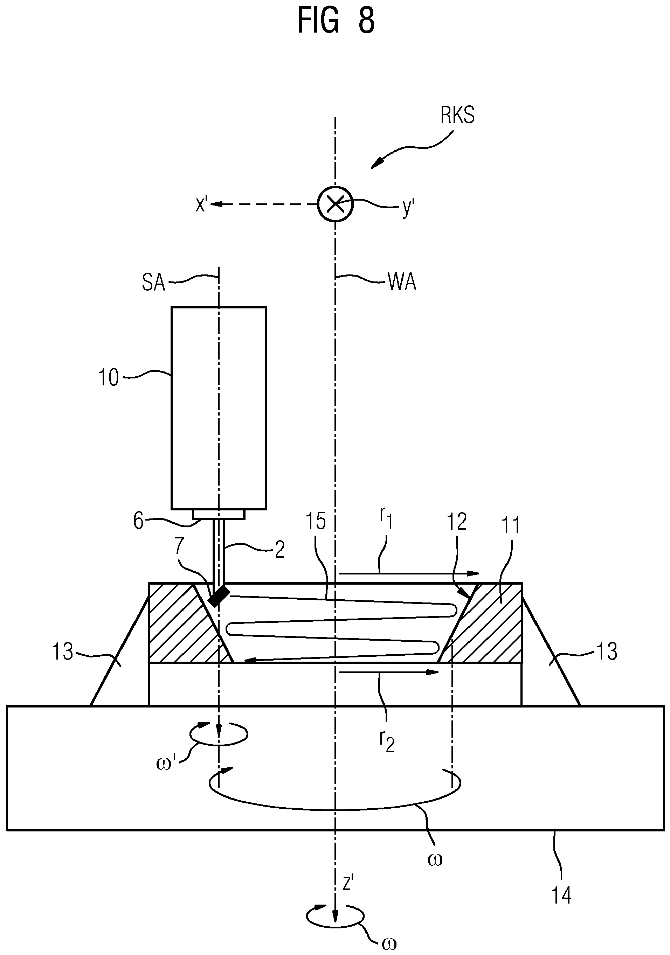

Figur 8 veranschaulicht dies für den Fall, dass die Winkelgeschwindigkeit $\omega$ als Funktion des Abstands der Schneide 7 des Werkzeugs 2 von der Rotationsachse z' festgelegt wird. Diese Ausführungsform bietet den Vorteil, dass sich damit insbesondere konstante Schnittgeschwindigkeiten erreichen lassen.

In Figur 8 sind zur Verbesserung der Übersichtlichkeit gleiche, aus den vorherigen Figuren bereits ersichtliche Gegenstände mit denselben Bezugszeichen versehen.

Für die Schnittgeschwindigkeit $v_c$ gilt allgemein beim Interpolationsdrehen:

$$v_c = 2 * \pi * r * n = \omega * r$$

r ist der Radius und damit der Abstand der Schneide von der Rotationsachse z';

n ist die Drehzahl, mit der die Spindelachse SA um die Rotationsachse z' bzw. das Werkzeug 2 um die Spindelachse SA rotieren;

$\omega$ ist die Winkelgeschwindigkeit, mit der die Spindelachse SA um die Rotationsachse z' bzw. das Werkzeug 2 um die Spindelachse SA rotieren.

Eine konstante Schnittgeschwindigkeit bedeutet: $v_c = K$, wobei K eine Konstante ist. Daraus folgt:

$$\omega = K/r$$

Die Winkelgeschwindigkeit $\omega$ ist somit abhängig vom Radius r, der den Abstand der Schneide 7 von der Rotationsachse z' angibt.

Das Rotationskoordinatensystem RKS rotiert im Ausführungsbeispiel mit der (variablen) Winkelgeschwindigkeit $\omega$ um die Rotationsachse z'. Auch die Spindel 10 bewegt sich um die Rotationsachse z', derart, dass die Spindelachse SA mit der (variablen) Winkelgeschwindigkeit $\omega$ um die Rotationsachse z' rotiert. Gleichzeitig rotiert auch das Werkzeug 2 mit der (variablen) Winkelgeschwindigkeit $\omega'$ um die Spindelachse SA, wobei (im Ausführungsbeispiel) stets gilt: $\omega = \omega'$.

Das Rotationskoordinatensystem RKS ist so positioniert, dass die Achse z' mit der Werkstückbearbeitungsachse WA, also einer Symmetrielinie des zu bearbeitenden Teils des Werkstücks 11, zusammenfällt.

Im Ausführungsbeispiel gemäß FIG 8 soll bei dem ursprünglich als Hohlzylinder ausgeführten Werkstück 11 ein Konus 12 durch Interpolationsdrehen hergestellt werden. Hierzu ist das Werkstück 11 mittels Spannmitteln 13 fest auf einem Werkstücktisch 14 befestigt. Während der gesamten Bearbeitung durch Interpolationsdrehen bleiben der Werkstücktisch 14 und damit auch das Werkstück 11 unbewegt und ortsfest.

Am oberen Ende des Werkstücks 11 hat der Konus 12 den Radius r1 und am unteren Ende den Radius r2. Daher erfolgt die Bearbeitung des Konus zu Beginn (am oberen Ende des Werkstücks 11) mit einer Winkelgeschwindigkeit $\omega1 = K/r1$. Am Ende der Bearbeitung beträgt der Radius r2 und damit die Winkelgeschwindigkeit $\omega2 = K/r2$.

Während der Bearbeitung bewegt sich die Schneide 7 des Drehmeißels 2 entlang der schematisch skizzierten Werkzeugbahn 15 spiralförmig von oben nach unten entlang der Mantelfläche eines Kegelstumpfes mit dem oberen Radius $r_1$ und dem unteren Radius $r_2$. Die Winkelgeschwindigkeit $\omega$ der Bewegung nimmt dabei ständig zu, so dass sich gemäß dem oben genannten Zusammenhang eine konstante Schnittgeschwindigkeit $v_c$ ergibt.

Im Ausführungsbeispiel gemäß FIG 8 ist die Spindelachse SA parallel zu der Werkstückbearbeitungsachse WA ausgerichtet. Abhängig von der auszuführenden Bearbeitung und dem verwendeten Werkstück kann die Spindelachse SA jedoch auch geneigt sein gegenüber der Werkstückbearbeitungsachse WA.

Weiterhin gilt im Ausführungsbeispiel: $\omega = \omega'$. Dies ist bei der Verwendung eines Drehmeißels mit einer gerichteten Schneide sinnvoll. Es sind jedoch auch andere Bearbeitungen mit anderen Werkzeugen denkbar, bei denen dieser Zusammenhang nicht gelten muss, z.B. bei einer Bearbeitung mit einem mehrschneidigen Werkzeug.

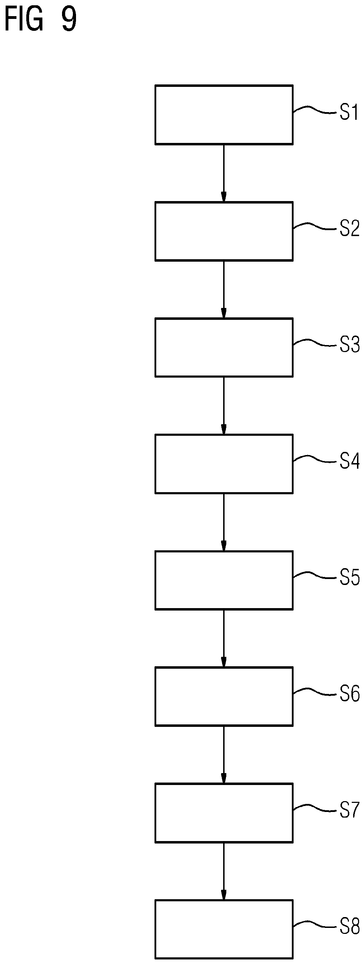

Figur 9 veranschaulicht wesentliche Verfahrensschritte bei der Durchführung eines erfindungsgemäßen Verfahrens. In einem ersten Verfahrensschritt S1 wird ein bezüglich der verwendeten Werkzeugmaschine ortsfestes MKS festgelegt. In einem Verfahrensschritt S2 wird für ein in die Werkzeugmaschine eingespanntes, zu bearbeitendes Werkstück eine Werkstückbearbeitungsachse für einen zu bearbeitenden Werkstückbereich des Werkstücks festgelegt. Die Werkstückbearbeitungsachse ist eine Symmetrieachse des zu bearbeitenden Werkstückbereichs des Werkstücks. In einem Verfahrensschritt S3 wird der Nullpunkt eines RKS auf der Werkstückbearbeitungsachse in dem MKS festgelegt, beispielsweise durch Festlegung eines Verschiebungs-vektors. In einem Verfahrensschritt S4 wird die Orientierung des RKS in Bezug zu dem MKS festgelegt. Hierzu sind allgemein drei Schwenkbewegungen erforderlich. Für den Spezialfall, dass die Werkstückbearbeitungsachse in der x-z-Ebene des MKS liegt, genügt eine Drehung um die y-Achse, so dass die z'-Achse des RKS mit der Werkstückbearbeitungsachse zusammenfällt. In einem Verfahrensschritt S5 wird die Werkzeugbahn in dem RKS, vorzugsweise bezüglich der Achsen x' und z' bei y'=0 festgelegt. Die Festlegung der Werkzeugbahn entspricht somit weitgehend der beim "normalen" Drehen. In einem Verfahrensschritt S6 wird die Rotation der Werkzeugspindel mit der Winkelgeschwindigkeit $\omega$ gestartet. Gleichzeitig erfolgt in einem Verfahrensschritt S7 auch der Start der Rotation des RKS mit der Winkelgeschwindigkeit $\omega'$ um die z'-Achse. Vorzugsweise gilt $\omega' = \omega$. Diese Rotationen bewirken, dass das Werkzeug mit orientierter Schneide um den zu bearbeitenden Werkstückbereich des Werkstücks rotiert. In einem Verfahrensschritt S8 wird schließlich die Werkzeugbahn wie in Schritt 5 vorgegeben abgefahren, wobei sich gemäß der Erfindung während der Bearbeitung die Winkelgeschwindigkeiten $\omega$ bzw. $\omega'$ abhängig von vorgebbaren Randbedingungen, z.B. der Einhaltung einer konstanten Schnittgeschwindigkeit, ändern.

Ein durch die Erfindung erzielter, wesentlicher Vorteil gegenüber dem herkömmlichen "Interpolationsdrehen" liegt darin begründet, dass auf vorhandene Drehzyklen bzw. vorhandene Werkzeugbahnen zur Drehbearbeitung zurückgegriffen werden kann und diese lediglich in dem RKS vorgegeben werden müssen. Die Transformation sorgt dann dafür, dass die Maschine an sich relativ komplexe Achsbewegungen ausführt, die zu der gewünschten Bearbeitung führen, die Vorgabe dieser Achsbewegungen im RKS aber verhältnismäßig einfach ist und weitgehend den Vorgaben beim herkömmlichen "Drehen" entspricht.

Das durch das Ausführungsbeispiel erläuterte Grundprinzip kann analog auch auf komplexere Bearbeitungsvorgänge übertragen werden. Insbesondere ist es nicht zwingend erforderlich, dass die Werkstückbearbeitungsachse in der x-z-Ebene des MKS liegt. Im Prinzip kann die Werkstückbearbeitungsachse beliebig im Arbeitsraum der Werkzeugmaschine liegen. Allerdings ist dann gegebenenfalls wenigstens eine weitere Rundachse der Werkzeugmaschine erforderlich, beispielsweise eine A-Achse zum Ausführen einer Schwenkbewegung des Werkzeuges um die x-Achse bzw. eine zur x-Achse parallele Achse.

Bezüglich der Koordinatentransformation wäre allgemein eine Verschiebung und Orientierung des RKS gegenüber dem MKS im dreidimensionalen Raum erforderlich, was im Vergleich zu dem Ausführungsbeispiel zu mehr Rechenaufwand in der Steuerung und komplexeren Maschinenbewegungen führt. An den Vorteilen für den Benutzer einer entsprechend eingerichteten Werkzeugmaschine ändert dies jedoch nichts.

## Patentansprüche

1. Verfahren zur Steuerung einer Relativbewegung zwischen einem Werkzeug (2) und einem Werkstück (3, 11) zur Bearbeitung des Werkstücks (3, 11) mittels einer Werkzeugmaschine (1),

   - wobei ein Maschinenkoordinatensystem (MKS) in Bezug zu einer Maschinenbasis (4) der Werkzeugmaschine (1) festgelegt wird,
- dass ein Rotationskoordinatensystem (RKS) in Relation zu dem Maschinenkoordinatensystem (MKS) festgelegt wird durch:

- Festlegung des Koordinatenursprungs des Rotationskoordinatensystems (RKS)in dem Maschinenkoordinatensystem (MKS),
- Festlegung der Orientierung wenigstens einer ausgewählten Koordinatenachse (z') des Rotationskoordinatensystems (RKS) in dem Maschinenkoordinatensystem (MKS),
- Festlegung einer Rotationsachse (z'), um die das Rotationskoordinatensystem (RKS) in dem Maschinenkoordinatensystem (MKS) rotiert,
- Festlegung einer Winkelgeschwindigkeit (ω), mit der das Rotationskoordinatensystem (RKS) um die Rotationsachse (z') rotiert,

- wobei wenigstens eine Werkzeugbahn (15) in dem Rotationskoordinatensystem (RKS) festgelegt wird,
- wobei die Relativbewegung gemäß der in dem Rotationskoordinatensystem (RKS) festgelegten Werkzeugbahn (15) gesteuert wird und
- wobei die Rotationsachse (z') relativ zu dem Werkstück (3, 11) so ausgerichtet wird, dass sie auf einer Werkstückbearbeitungsachse (WA) eines durch das Werkzeug (2) zu bearbeitenden Werkstückbereichs (9, 12) des Werkstücks (3, 11) liegt,

**dadurch gekennzeichnet, dass** die Winkelgeschwindigkeit (ω), mit der das Rotationskoordinatensystem (RKS) um die Rotationsachse (z') rotiert, während der Bearbeitung des Werkstücks (3, 11) variiert.

2. Verfahren nach Anspruch 1, wobei das Werkzeug (2) in einer Werkzeugspindel (6) befestigt und um eine Werkzeugspindelachse (SA) rotierbar ist und wobei die Werkzeugspindel (6) derart bezüglich der Rotationsachse (z') bewegt wird, dass die Werkzeugspindelachse (SA) mit der Winkelgeschwindigkeit (ω) um die Rotationsachse (z') rotiert.

3. Verfahren nach Anspruch 1 oder 2, wobei die Winkelgeschwindigkeit (ω) als Funktion des Abstands (r) einer Schneide (7) des Werkzeugs (2) von der Rotationsachse (z') festgelegt wird.

4. Verfahren nach einem der vorherigen Ansprüche, wobei die Winkelgeschwindigkeit (ω) derart bestimmt wird, dass sich während der Bearbeitung des Werkstücks (3, 11) eine konstante ergibt.

5. Verfahren nach einem der vorherigen Ansprüche, wobei als Werkstückbearbeitungsachse (WA) eine Symmetrieachse des durch das Werkzeug (2) zu bearbeitenden Werkstückbereichs (9, 12) festgelegt wird.

6. Verfahren nach einem der vorherigen Ansprüche, wobei das Werkzeug (2, 12) mittels wenigstens drei translatorischer (L1, L2, L3) und wenigstens einer rotatorischen Achse (B) relativ zu dem Werkstück (3, 11) bewegt wird.

7. Verfahren nach einem der Ansprüche 3 bis 6, wobei eine Orientierung der Schneide (7) des Werkzeugs (2) in dem Rotationskoordinatensystem (RKS) festgelegt wird und wobei die Werkzeugbahn die Orientierung der Schneide (7) umfasst.

8. Verfahren nach Anspruch 7, wobei die Orientierung der Schneide (7) in dem Rotationskoordinatensystem (RKS) während der Bearbeitung des Werkstücks (3, 11) beibehalten wird.

9. Verfahren nach Anspruch einem der vorherigen Ansprüche, wobei die Werkzeugbahn anhand einer vorgegebenen Kontur des Werkstückbereichs (9, 12) ermittelt wird.

10. Verfahren nach Anspruch einem der vorherigen Ansprüche, wobei die Werkzeugbahn (15) durch einen für eine herkömmliche Drehbearbeitung programmierten Drehzyklus festgelegt wird.

11. Numerische Steuereinrichtung (8) zur Steuerung einer Relativbewegung zwischen einem Werkzeug (2) und einem Werkstück (3, 11) zur Bearbeitung des Werkstücks (3, 11) mittels einer Werkzeugmaschine (1),

- wobei ein Maschinenkoordinatensystem (MKS) in Bezug zu einer Maschinenbasis (4) der Werkzeugmaschine (1) festlegbar ist,

- wobei ein Rotationskoordinatensystem (RKS) in Relation zu dem Maschinenkoordinatensystem (MKS) festlegbar ist durch:

- Festlegung des Koordinatenursprungs des Rotationskoordinatensystems (RKS) in dem Maschinenkoordinatensystem (MKS),
- Festlegung der Orientierung wenigstens einer ausgewählten Koordinatenachse (z') des Rotationskoordinatensystems (RKS) in dem Maschinenkoordinatensystem (MKS),
- Festlegung einer Rotationsachse (z'), um die das Rotationskoordinatensystem (RKS) in dem Maschinenkoordinatensystem (MKS) rotiert,
- Festlegung einer Winkelgeschwindigkeit (ω), mit der das Rotationskoordinatensystem (RKS) um die Rotationsachse (z') rotiert,

- wobei wenigstens eine Werkzeugbahn (15) in dem Rotationskoordinatensystem (RKS) festlegbar ist,
- wobei die Relativbewegung gemäß der in dem Rotationskoordinatensystem (RKS) festgelegten Werkzeugbahn (15) steuerbar ist und
- wobei die Rotationsachse (z') relativ zu dem Werkstück (3, 11) derart ausrichtbar ist, dass sie auf einer Werkstückbearbeitungsachse (WA) eines durch das Werkzeug (2) zu bearbeitenden Werkstückbereichs (9, 12) des Werkstücks liegt,

**dadurch gekennzeichnet, dass** die Winkelgeschwindigkeit (ω), mit der das Rotationskoordinatensystem (RKS) um die Rotationsachse (z') rotiert, während der Bearbeitung des Werkstücks (3, 11) variationsfähig ist.

12. Numerische Steuereinrichtung (8) nach Anspruch 11, wobei das Werkzeug (2) in einer Werkzeugspindel (6) befestigt und um eine Werkzeugspindelachse (SA) rotierbar ist und wobei die Werkzeugspindel (6) derart bezüglich der Rotationsachse (z') bewegbar ist, dass die Werkzeugspindelachse mit der Winkelgeschwindigkeit (ω) um die Rotationsachse (z') rotiert.

13. Numerische Steuereinrichtung (8) nach Anspruch 11 oder 12, wobei die Winkelgeschwindigkeit (ω) als Funktion des Abstands (r) einer Schneide (7) des Werkzeugs (2) von der Rotationsachse (z') festlegbar ist.

14. Numerische Steuereinrichtung (8) nach einem der Ansprüche 11 bis 13, wobei die Winkelgeschwindigkeit (ω) derart festlegbar ist, dass sich während der Bearbeitung des Werkstücks (3, 11) eine konstante Schnittgeschwindigkeit ergibt.

15. Werkzeugmaschine (1) zur Bearbeitung eines Werkstücks (3, 11) mittels eines Werkzeugs (2), umfassend:

- wenigstens drei translatorische (L1, L2, L3) Achsen und wenigstens eine rotatorische Achse (B) sowie eine um eine Werkzeugspindelachse (SA) rotierbare Werkzeugspindel (6) zur Relativbewegung eines mit der Werkzeugspindel (6) verbundenen Werkzeuges (2) relativ zu einem Werkstück (3, 11), welches an einer Werkstückaufnahme (5) der Werkzeugmaschine (1) befestigt ist,
- Mittel zum Festlegen eines Maschinenkoordinatensystems (MKS) in Bezug zu einer Maschinenbasis (4) der Werkzeugmaschine (1),
- Mittel zum Festlegen eines Rotationskoordinatensystem (RKS) in Relation zu dem Maschinenkoordinatensystem (MKS),

- wobei der Koordinatenursprung des Rotationskoordinatensystems (RKS) in dem Maschinenkoordinatensystem (MKS) festlegbar ist,
- wobei die Orientierung wenigstens einer ausgewählten Koordinatenachse (z') des Rotationskoordinatensystem (RKS) in dem Maschinenkoordinatensystem (MKS) festlegbar ist,
- wobei eine Rotationsachse (z'), um die das Rotationskoordinatensystem (RKS) rotiert, in dem Maschinenkoordinatensystem (MKS) festlegbar ist,
- wobei eine Winkelgeschwindigkeit (ω), mit der das Rotationskoordinatensystem (RKS) in dem Maschinenkoordinatensystem (MKS) um die Rotationsachse (z') rotiert, festlegbar ist,
- wobei die Winkelgeschwindigkeit (ω), mit der das Rotationskoordinatensystem (RKS) um die Rotationsachse (z') rotiert, während der Bearbeitung des Werkstücks (3, 11) variationsfähig ist,

- Mittel zum Festlegen wenigstens einer Werkzeugbahn (15) in dem Rotationskoordinatensystem (RKS),
- eine numerische Steuereinrichtung (8) nach einem der Ansprüche 11 bis 14 zur Steuerung der Relativbewegung zwischen dem Werkzeug (2) und dem Werkstück (3, 11) gemäß der in dem RKS festgelegten Werkzeugbahn (15).

FIG 1

FIG 2

FIG 3

FIG 4

RKS

φ

x'

y'

z'

9

3

x

MKS

z

y

FIG 5

RKS

x'

10

6

y'

2

z'

7

SA

x

MKS

z

9

y

3

# FIG 6

RKS

x'

y'

ω

z'

10

6

2

ω'

7

3

x

MKS

z

y

# FIG 7

RKS

y'

x'

ω

z'

ω'

10

7

6

2

3

x

MKS

z

y

# FIG 8

## FIG 9

**Europäisches Patentamt**
**European Patent Office**
**Office européen des brevets**

# EUROPÄISCHER RECHERCHENBERICHT

Nummer der Anmeldung

EP 20 19 1315

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 3 582 043 A1 (SIEMENS AG [DE]) 18. Dezember 2019 (2019-12-18) * das ganze Dokument * ----- | 1-15 | INV. G05B19/408 G05B19/41 B23B3/26 |
| A | DE 15 88 062 A1 (BOEHRINGER GMBH GEB) 30. April 1970 (1970-04-30) * Seite 1 - Seite 2 * ----- | 1-15 | |
| A | DE 26 28 136 A1 (GEN ELECTRIC) 20. Januar 1977 (1977-01-20) * Seite 1 - Seite 3 * * Seite 9 - Seite 10 * ----- | 1-15 | |

| | RECHERCHIERTE SACHGEBIETE (IPC) |
|---|---|
| | B23G B23B G05B |

Der vorliegende Recherchenbericht wurde für alle Patentansprüche erstellt

| Recherchenort | Abschlußdatum der Recherche | Prüfer |
|---|---|---|
| München | 15. Februar 2021 | Patrovsky, Andreas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 19 1315

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-02-2021

| Im Recherchenbericht angeführtes Patentdokument | Datum der Veröffentlichung | Mitglied(er) der Patentfamilie | Datum der Veröffentlichung |
|---|---|---|---|
| EP 3582043 A1 | 18-12-2019 | CN 110586960 A<br>EP 3582043 A1<br>US 2019377332 A1 | 20-12-2019<br>18-12-2019<br>12-12-2019 |
| DE 1588062 A1 | 30-04-1970 | KEINE | |
| DE 2628136 A1 | 20-01-1977 | DE 2628136 A1<br>GB 1541106 A<br>JP S525073 A<br>JP S6216270 Y2<br>JP S60100139 U<br>US 3976861 A | 20-01-1977<br>21-02-1979<br>14-01-1977<br>24-04-1987<br>08-07-1985<br>24-08-1976 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19537292 A1

- EP 3582043 A1